# EUROPÄISCHE PATENTSCHRIFT

(11) **EP 3 347 613 B1**
(45) Veröffentlichungstag und Bekanntmachung des Hinweises auf die Patenterteilung: **04.03.2020**
(21) Anmeldenummer: 16760721.7
(22) Anmeldetag: 06.09.2016
(51) Int. Cl.: C21D 8/10, C21D 9/02, F16F 1/02

(54) **ROHRFEDER FÜR KRAFTFAHRZEUGE UND EIN VERFAHREN ZUM HERSTELLEN EINER ROHRFEDER**
TUBULAR SPRING FOR MOTOR VEHICLES, AND A METHOD FOR PRODUCING A TUBULAR SPRING
RESSORT TUBULAIRE POUR VÉHICULES À MOTEUR ET PROCÉDÉ DE FABRICATION D'UN RESSORT TUBULAIRE

(30) Priorität: 11.09.2015 DE 102015217401
(43) Veröffentlichungstag der Anmeldung: 18.07.2018
(73) Patentinhaber: Thyssenkrupp Federn und Stabilisatoren GmbH, 58119 Hagen (DE); thyssenkrupp AG, 45143 Essen (DE)
(72) Erfinder: LECHNER, Dieter, 40470 Düsseldorf (DE); STRAKA, Timo, 57462 Olpe (DE); SCHNEIDER, Frank, 44229 Dortmund (DE)
(74) Vertreter: thyssenkrupp Intellectual Property GmbH
(86) Internationale Anmeldenummer: PCT/EP2016/070924
(87) Internationale Veröffentlichungsnummer: WO 2017/042146

(56) Entgegenhaltungen:
- DE-A1- 4 426 627
- DE-A1- 19 839 383
- DE-U1- 9 210 257
- FR-A1- 2 124 576
- FR-A1- 2 810 588
- JP-A- 2005 282 728
- JP-U- S56 129 628

## Beschreibung

Die vorliegende Erfindung betrifft eine Rohrfeder für Kraftfahrzeuge und ein Verfahren zum Herstellen einer Rohrfeder.

### Stand der Technik

Federn und Drehstäbe aus umgeformtem Stahlrohr oder Stahldraht sind im Stand der Technik in einer Vielzahl von Ausführungsformen, wie z.B. aus der JP356129628U bekannt. Drehstäbe werden beispielsweise auch als Drehstabfedern, Stabilisierungsdrehstäbe oder Torsionsfederstäbe bezeichnet. Eingesetzt werden Stahlfedern und Drehstabfedern insbesondere in Kraftfahrzeugen, wobei Stahlfedern beispielsweise in Feder-/Dämpfungssystemen zur Abfederung von Fahrbahnunebenheiten und Drehstabfedern zur Stabilisierung gegen Wanken bei Kurvenfahrt eines Kraftfahrzeugs, Fahrten eines Kraftfahrzeugs über wechselnde Fahrbahnoberflächen und bei Fahrbahnunebenheiten eingesetzt werden. Solche Stabilisatoren sind üblicherweise im Bereich der Vorder- und der Hinterachse angeordnet und erstrecken sich zumeist über die gesamte Breite des Fahrzeugs. Die Formgebung des Stahlrohres oder Stahldrahts zu Federn und Drehstäben kann nach im Stand der Technik bekannten Umformverfahren erfolgen. Vor oder nach dieser Formgebung kann das Stahlrohr oder der Stahldraht verschiedene Vorbereitungsschritte erfahren, welche die Feder- und Festigkeitseigenschaften beeinflussen und weitere bestimmte Gebrauchseigenschaften eines Werkstoffs verbessern. So können Federn und/oder Drehstäbe mit hoher/n Festigkeit(en) bei vergleichsweise geringem Materialeinsatz und somit geringem Gewicht und Materialkosten hergestellt werden. Hierbei weisen Rohrfedern im Vergleich zu Stabfedern ein geringeres Gewicht bei gleichen Federeigenschaften auf, die Steifigkeit und Biegefähigkeit bei Rohrstabilisatoren ist abhängig von dem Durchmesser und der Wanddicke. Eine Vergrößerung des Durchmesser-Wanddicken-Verhältnisses zugunsten einer größeren Gewichtseinsparung ist jedoch aufgrund einer verminderten Biegefähigkeit durch die während der Formgebung und im Betrieb des Bauteils verursachten höheren Innenspannungen nur in einem begrenzten Bereich möglich. Somit sind die Eigenschaften von Rohfedern auf einen engen Bereich an geometrischen Abmessungen und den daraus resultierenden Federeigenschaften begrenzt bzw. ist die Umformbarkeit des Stahlrohres oder Stahldrahtes bei einigen im Stand der Technik bekannten Umformverfahren begrenzt. Insbesondere stehen die Parameter Festigkeit und Zähigkeit im Zusammenhang mit dem Umformvermögen und der Lebensdauer einer Feder. Des Weiteren haben Stabfedern im Gegensatz zu Rohrfedern mit gleichen geometrischen Außenbemaßungen einerseits ein höheres Gewicht auf der anderen Seite benötigen Rohrfedern einen Korrosionsschutz der Innenrohroberfläche, welche schwer zugänglich ist und weitere Verfahrensschritte, wie beispielsweise Kugelstrahlen erfordert.

Aus der DE 103 15 418 B3 ist beispielsweise ein Verfahren zur Herstellung von warmgeformten Schraubenfedern bekannt.

In der DE 198 39 383 C2 ist ein Verfahren zur thermomechanischen Behandlung von Stahl für torsionsbeanspruchte Federelemente beschrieben.

Der vorliegenden Erfindung liegt daher die Aufgabe zugrunde, eine verbesserte Rohrfeder, insbesondere eine verbesserte Schraubenfeder, Drehstabfeder und/oder einen Stabilisator für Kraftfahrzeuge und ein Verfahren zum Herstellen einer Rohrfeder, bereitzustellen, bei welchem die zuvor genannten Nachteile vermieden werden. Insbesondere soll es mit dieser verbesserten Rohrfeder und dem verbesserten Verfahren zum Herstellen einer Rohrfeder, möglich sein, die Vorteile einer aus Stahlrohr hergestellten Feder mit denen einer aus Stahldraht hergestellten wenigstens teilweise zu vereinen. Zudem sollte es mit der erfindungsgemäßen Rohrfeder und dem verbesserten Verfahren zum Herstellen einer Rohrfeder, möglich sein, eine im Vergleich zu konventionellen Rohrfedern und Verfahren verbesserte Biegefähigkeit bereitzustellen und durch Umformverfahren hervorgerufene Einrisse zu vermeiden. Des Weiteren soll auf die Notwendigkeit eines Rohrinnenoberflächenkorrosionsschutzes verzichtet werden können. Zudem soll mit dem verbesserten Verfahren zum Herstellen einer Rohrfeder ein stabiler Fertigungsprozess bereitgestellt werden, welches einfach und sicher in bereits bestehende Verfahren implementiert werden kann. Zudem soll die Möglichkeit bestehen, ein für unterschiedliche Teilbereiche und/oder Durchmesser der Rohrfeder vorgegebenes Flächenträgheitsmoment gezielt einstellen und auch in den unterschiedlichen Teilbereichen und/oder Durchmessern variierend einstellen zu können.

### Offenbarung der Erfindung

Diese Aufgabe wird mit einer Rohrfeder nach Anspruch 1 und einem Verfahren zum Herstellen einer wenigstens in einem Teilbereich ausgeschäumten Rohrfeder nach Anspruch 6 gelöst.

Die erfindungsgemäße Rohrfeder für Kraftfahrzeuge weist gegenüber konventionellen Rohrfedern den Vorteil auf, dass die Eigenschaften einer Stabfeder mit denen einer Rohrfeder wenigstens teilweise vereint werden. Insbesondere sind mit der erfindungsgemäßen Rohrfeder Umformungen möglich, welche die Biegefähigkeit konventioneller Rohrfedern bei weitem überschreiten. Zudem können bei der erfindungsgemäßen Rohrfeder Eigenschaften, insbesondere die Steifigkeit und Biegesteifigkeit in jedem Abschnitt und/oder Bereich der Feder bedarfsgerecht hergestellt werden. Des Weiteren sind bei der erfindungsgemäßen Rohrfeder die Steifigkeitseigenschaften und Federcharakteristiken über das Durchmesser-Wanddicken-Verhältnis unter der Berücksichtigung von Leichtbauweisen einstellbar. Zudem benötigt die erfindungsgemäße Rohrfeder keinen Rohrinnenoberflächenkorrosionsschutz. Des Weiteren ist es möglich, bei einem vorgegebenen Außenrohrdurchmesser und/oder einer vorgegebenen Wanddicke eine Vielzahl an unterschiedlichen Federraten herzustellen.

Das erfindungsgemäße Verfahren zum Herstellen einer wenigstens in einem Teilbereich ausgeschäumten Rohrfeder weist gegenüber konventionellen Verfahren den Vorteil auf, dass auf einen Verfahrensschritt eines Rohrinnenoberflächenkorrosionsschutzes verzichtet werden kann. Zudem wird mit dem erfindungsgemäßen Verfahren zum Herstellen einer wenigstens in einem Teilbereich ausgeschäumten Rohrfeder eine verbesserte Biegefähigkeit der Rohrfeder bereitgestellt, womit durch Umformverfahren hervorgerufene Einrisse weitgehend vermieden werden. Ein weiterer Vorteil des erfindungsgemäßen Verfahrens ist, dass es in bereits bestehende Verfahren einfach und zuverlässig integriert werden kann. Des Weiteren kann die Steifigkeit der Rohrfeder entlang der Rohrfederlänge über den in dem jeweiligen Teilbereich der Rohrfeder eingebrachten Metallschaum und dessen Eigenschaften variabel eingestellt werden. Hieraus ergibt sich eine unter Betriebslast angepasste Spannungsverteilung.

Gegenstand der Erfindung ist daher eine Rohrfeder, insbesondere als Schraubenfeder, Drehstabfeder und/oder Stabilisator für Kraftfahrzeuge, umfassend mindestens ein Metallrohrelement mit einem Rohrinnenquerschnitt, einem Rohrinnendurchmesser, einem Rohraußendurchmesser, einer Rohrinnenwandung und einer Rohrwanddicke, wobei in dem Rohrinnenquerschnitt des mindestens einen Metallrohrelements der Rohrfeder wenigstens in einem Teilbereich mindestens ein Metallschaum angeordnet ist und das mindestens eine Metallrohrelement ein wenigstens teilweise martensitisches Gefüge aufweist.

Ein weiterer Gegenstand der Erfindung ist ein Verfahren zum Herstellen einer wenigstens in einem Teilbereich ausgeschäumten Rohrfeder, insbesondere als Schraubenfeder, Drehstabfeder und/oder Stabilisator für Kraftfahrzeuge, umfassend die Schritte:
a) Bereitstellen wenigstens einer Vormaterialzusammensetzung, umfassend mindestens eine Metallkomponente mit einer Schmelztemperatur und eine Treibmittelkomponente;
b) Bereitstellen einer Rohrfeder umfassend mindestens ein Metallrohrelement mit einem Rohrinnenquerschnitt, einem Rohrinnendurchmesser, einem Rohraußendurchmesser, einer Rohrinnenwandung und einer Rohrwanddicke;
c) Einbringen der in Schritt a) bereitgestellten mindestens einen Vormaterialzusammensetzung in das mindestens eine Metallrohrelement der in Schritt b) bereitgestellten Rohrfeder, wobei das mindestens eine Metallrohrelement vollständig oder in Teilbereichen befüllt wird;
d) Vergüten wenigstens des in Schritt c) vollständig oder in Teilbereichen befüllten mindestens einen Metallrohrelements, umfassend
   i. Erwärmen des in Schritt c) vollständig oder in Teilbereichen befüllten mindestens einen Metallrohrelements wenigstens auf eine Härtungstemperatur, wobei die Härtungstemperatur eine Temperatur oberhalb der Mindestrekristallisationstemperatur des Metallrohrelements, vorzugsweise gleich oder größer als die Austenitstarttemperatur des Metallrohrelements ist und wobei die Härtungstemperatur gleich oder größer als die Schmelztemperatur der in Schritt c) eingebrachten mindestens einen Vormaterialzusammensetzung ist, wobei die Vormaterialzusammensetzung aufschäumt unter Herstellen eines wenigstens in einem Teilbereich ausgeschäumten mindestens einen Metallrohrelements;
   ii. Abschrecken des in Schritt i. wenigstens auf die Härtungstemperatur erwärmten vollständig oder in Teilbereichen befüllten mindestens einen Metallrohrelements auf eine erste Abkühltemperatur, wobei die erste Abkühltemperatur eine Temperatur unterhalb der Mindestrekristallisationstemperatur des Metallrohrelements ist und sich in dem vollständig oder in Teilbereichen befüllten mindestens einen Metallrohrelement ein wenigstens teilweise martensitisches Gefüge einstellt;
   iii. Wiedererwärmen des in Schritt ii. abgeschreckten vollständig oder in Teilbereichen befüllten mindestens einen Metallrohrelements auf eine erste Anlasstemperatur, welche kleiner ist als die Austenitstarttemperatur;
   iv. Abkühlen des in Schritt iii. wiedererwärmten vollständig oder in Teilbereichen befüllten mindestens einen Metallrohrelements auf eine zweite Abkühltemperatur, wobei die zweite Abkühltemperatur wenigstens kleiner ist als die erste Anlasstemperatur,
wobei wenigstens in Teilbereichen zwischen der Rohrinnenwandung des wenigstens in einem Teilbereich ausgeschäumten mindestens einen Metallrohrelements und dem Metallschaum des wenigstens in einem Teilbereich ausgeschäumten mindestens einen Metallrohrelements eine wenigstens teilweise stoffschlüssige Verbindung ausgebildet wird.

Ein weiterer Gegenstand der Erfindung ist die Verwendung einer wenigstens in einem Teilbereich ausgeschäumten Rohrfeder für Fahrwerke von Fahrzeugen, insbesondere Kraftfahrzeugen.

### Detaillierte Beschreibung der Erfindung

Im Rahmen der vorliegenden Erfindung wird unter einer Rohrfeder ein Bauteil umfassend mindestens ein Metallrohrelement verstanden, welches unter Belastung nachgibt und nach Entlastung in die ursprüngliche Gestalt zurückkehrt. Insbesondere kann eine Rohrfeder ein aus Stahlrohr schrauben- oder spiralförmig gewickeltes oder stabförmig gestrecktes oder abgeknicktes Bauteil sein. Beispiele für Rohrfedern sind ausgewählt aus einer Gruppe von Schraubenfedern, insbesondere Schraubendruckfedern, Schraubenzugfedern, Kegelfedern, Sprungfedern, Biegefedern, insbesondere Spiralfedern, gewundenen Torsionsfedern und Kombinationen hiervon.

Im Rahmen der vorliegenden Erfindung wird unter einer Drehstabfeder ein Bauteil umfassend mindestens ein Metallrohrelement verstanden, bei welchem bei fester Einspannung an beiden Enden, die befestigten Enden gegeneinander eine Schwenkbewegung um die Drehstabfederachse ausführen. Insbesondere findet die mechanische Beanspruchung maßgeblich durch ein tangential zur Drehstabfederachse angreifendes Drehmoment statt. Unter Drehstabfedern werden beispielsweise auch ein gerader Torsionsstab, ein gewinkelter Torsionsstab, eine Torsionsfeder, ein Stabilisierungsdrehstab, ein Stabilisator, ein geteilter Stabilisator und Kombinationen hiervon verstanden.

Unter einem Metallschaum wird im Rahmen der vorliegenden Erfindung ein Schaum verstanden, welcher wenigstens eine Metallkomponente umfasst und mit mindestens einer Treibmittelkomponente aufgeschäumt wird. Insbesondere ist die wenigstens eine Metallkomponente ausgewählt aus einer Gruppe von Aluminiumlegierungen, insbesondere eutektische Legierungen von Aluminium und Silicium, AICU, AlMn, ALSi, AlMg, AlMgSi, AlZn, Titanlegierungen und Kombinationen hiervon. Beispielsweise kann die Metallkomponenten in einer Vormaterialzusammensetzung bereitgestellt werden, welche insbesondere durch Stangenpressen in eine geometrische Form gepresst wurde. Beispiele für geometrische Formen können ausgewählt sein aus einer Gruppe von Stangen, Stäbchen, Röhren, Kreuzelemente und Kombinationen hiervon. Insbesondere kann die bereitgestellte Vormaterialzusammensetzung als Schüttgut in eine Rohrfeder eingebracht werden. Beispiele von Treibmittelkomponenten sind Zusammensetzungen umfassend wenigstens ein Metallhydrid, insbesondere ausgewählt aus einer Gruppe von stöchiometrischen Metallhydriden beispielsweise der Alkali- und Erdalkalimetalle, hochpolymeren Metallhydriden, komplexen Metallhydriden, nicht stöchiometrischen Metallhydriden und Kombinationen hiervon. Insbesondere sind Treibmittelkomponenten ausgewählt als Titanhydrid und Titandihydrid.

In einer bevorzugten Ausführungsform der Erfindung ist der in dem Rohrinnenquerschnitt des mindestens einen Metallrohrelements der Rohrfeder wenigstens in einem Teilbereich mindestens eine angeordnete Metallschaum wenigstens teilweise stoffschlüssig mit der Rohrinnenwandung des mindestens einen Metallrohrelements verbunden.

In einer weiteren Ausführungsform der Erfindung weist der Rohraußendurchmesser bezogen auf die Rohrwanddicke des mindestens einen Metallrohrelements ein Verhältnis von größer als 8, vorzugsweise von größer als 12, besonders bevorzugt von größer als 20, ganz besonders bevorzugt von größer als 30 auf.

Gemäß einer weiteren möglichen Ausführungsform der Erfindung weist der in dem Rohrinnenquerschnitt des mindestens einen Metallrohrelements mindestens eine angeordnete Metallschaum eine Dichte von kleiner als 1 g/cm³, vorzugsweise von kleiner als 0,6 g/cm³, besonders bevorzugt in einem Bereich von 0,1 bis 0,5 g/cm³ auf.

In einer vorteilhaften Ausführungsform der Erfindung ist das mindestens eine Metallrohrelement wenigstens teilweise umgeformt zu einer nicht vollständig geradlinig ausgebildeten Rohrfeder.

Die Vormaterialzusammensetzung hat insbesondere einen Formgebungsprozess beispielsweise in einer Stangenpresse durchlaufen, wurde kompaktiert und weist eine zur Förderung geeignete Grundstruktur auf, damit das Einbringen, insbesondere die Befüllung einer Rohrfeder mit einem Schubverfahren durchführbar ist.

Die zwischen dem Metallschaum des wenigstens in einem Teilbereich ausgeschäumten mindestens einen Metallrohrelements und dem wenigstens in einem Teilbereich ausgeschäumten mindestens einen Metallrohrelements ausgebildete wenigstens teilweise stoffschlüssige Verbindung wird im Rahmen der Erfindung als eine unlösbare Verbindung verstanden, wie beispielsweise eine Schweißverbindung, insbesondere eine Diffusionsschweißverbindung. Beispielsweise kann die für eine Diffusionsschweißverbindung neben einer Wärmezufuhr notwendige Krafteinwirkung, insbesondere Druck auf die Innenmantelfläche des mindestens einen ausgeschäumten Metallrohrelements durch den Expansionsdruck des ausschäumenden Metallschaumes erfolgen.

Als Schmelztemperatur wird die Temperatur verstanden, bei der die mindestens eine Metallkomponente schmilzt, insbesondere vom festen in den flüssigen Aggregatzustand übergeht.

Als Mindestrekristallisationstemperatur wird die unterste Temperatur verstanden, bei der eine Rekristallisation, insbesondere eine Rekristallisation des Gefüges eines Stahldrahts, noch erfolgt.

Die Rekristallisationstemperatur ist diejenige Glühtemperatur, die bei einem kaltumgeformten Gefüge mit vorgegebenem Umformungsgrad in einem begrenzten Zeitraum zu einer vollständigen Rekristallisation führt. Die Rekristallisationstemperatur besitzt keinen festen Wert, sondern ist abhängig von der Höhe der vorangegangenen Kaltumformung und der Schmelztemperatur des Werkstoffs, insbesondere der Schmelztemperaturen von Stählen. Beispielsweise ist bei Stählen die Rekristallisationstemperatur auch abhängig von dem Kohlenstoffgehalt und der Legierung des jeweiligen Stahles.

Unter Austenitstarttemperatur wird im Rahmen der Erfindung eine Temperatur verstanden, bei welcher eine Umwandlung in ein wenigstens teilweises austenitisches Gefüge erfolgt.

Insbesondere erfolgt bei einer Austenitisierungstemperatur eine Umwandlung in ein wenigstens teilweises austenitisches Gefüge.

Beispielsweise kann das Einbringen in Schritt c) der in Schritt a) bereitgestellten mindestens einen Vormaterialzusammensetzung in das mindestens eine Metallrohrelement der in Schritt b) bereitgestellten Rohrfeder durch Einlegen, Einschieben, Einschütten und Kombinationen hiervon durchgeführt werden. Als Einbringvorrichtung kann beispielsweise eine Lanze verwendet werden.

In einer weiteren Ausführungsform der Erfindung weist das in Schritt b) bereitgestellte mindestens eine Metallrohrelement wenigstens teilweise ein ferritisch-perlitisches Gefüge auf.

In einer bevorzugten Ausführungsform der Erfindung wird die Herstellung der Rohrfeder mit einem Stahlrohr aufweisend einen Kohlenstoffgehalt im Bereich von 0,02 bis 0,8 Gew.-% durchgeführt. Insbesondere werden im Rahmen der Erfindung unter Stählen, aufweisend einen Kohlenstoffgehalt im Bereich von 0,02 bis 0,8 Gew.-% untereutektoide Stähle verstanden.

Gemäß einer weiteren möglichen Ausführungsform der Erfindung wird das Erwärmen in Schritt i. und/oder das Wiedererwärmen in Schritt iii. wenigstens des vollständig oder in Teilbereichen befüllten mindestens einen Metallrohrelements mit einer Wärmeübertragung, ausgewählt unter einer Wärmeleitung, insbesondere einer konduktiven Erwärmung, einer Wärmestrahlung, insbesondere einer induktiven Erwärmung, einer Konvektion und Kombinationen hiervon, durchgeführt.

Unter einem Erwärmen, wie es beispielweise in Schritt i., bei dem Wiedererwärmen in Schritt iii. und/oder einer anderen Wärmeübertragung im Rahmen der Erfindung erfolgt, wird eine solche verstanden, welche ausgewählt ist unter einer Wärmeleitung, insbesondere einer konduktiven Erwärmung, einer Wärmestrahlung, insbesondere einer Infrarot-Strahlung, einer induktiven Erwärmung, einer Konvektion, insbesondere einem Heizgebläse und Kombinationen hiervon. Insbesondere wird bei dem Erwärmen eine Temperatur größer als die Schmelztemperatur der Metallkomponente erreicht, wie beispielsweise von größer als 620°C. Das Wiedererwärmen erfolgt insbesondere bei einer Temperatur, welche kleiner ist als die Schmelztemperatur der Metallkomponente, beispielsweise von kleiner als 620°C.

In einer weiteren vorteilhaften Ausführungsform der Erfindung erfolgt das Wiedererwärmen in Schritt iii. des in Schritt ii. abgeschreckten vollständig oder in Teilbereichen befüllten mindestens einen Metallrohrelements auf eine erste Anlasstemperatur, welche kleiner ist als die Schmelztemperatur der Metallkomponente.

Ein Vergüten in Schritt d) im Sinne der vorliegenden Erfindung kann ein teilweises oder vollständiges Vergüten sein.

Gemäß einer weiteren möglichen Ausführungsform der Erfindung wird in einem weiteren Schritt e) ein Umformen des in Schritt b) bereitgestellten mindestens einen Metallrohrelements und/oder des in Schritt d) vergüteten wenigstens in einem Teilbereich ausgeschäumten mindestens einen Metallrohrelements zu einer nicht vollständig geradlinig ausgebildeten wenigstens in einem Teilbereich ausgeschäumten Rohrfeder durchgeführt.

In einer vorteilhaften Ausführungsform der Erfindung ist das Umformen in Schritt e) ein Kaltumformen und wird als ein Schritt in der Reihenfolge nach dem Vergüten in Schritt d) bei einer Kaltumformtemperatur durchgeführt, wobei die Kaltumformtemperatur eine Temperatur unterhalb der Mindestrekristallisationstemperatur des Metallrohrelements, vorzugsweise kleiner als die Austenitstarttemperatur des Metallrohrelements.

Unter Kaltumformen im Rahmen der vorliegenden Erfindung wird verstanden, wenn das Stahlrohr unterhalb der Rekristallisationstemperatur umgeformt wird. Insbesondere ist bei der Kaltumformung das Formänderungsvermögen begrenzt, da infolge von Kaltverfestigung die Zähigkeit und Umformbarkeit eines Werkstoffs, wie beispielsweise Stahl mit steigendem Umformungsgrad abnimmt. Beispiele für ein Kaltumformen sind Kaltwickeln, Kaltwinden, Kaltbiegen und Kombinationen hiervon.

Gemäß einer weiteren möglichen Ausführungsform der Erfindung ist das Umformen in Schritt e) ein Warmumformen und wird als ein Schritt in der Reihenfolge vor dem Vergüten in Schritt d) bei einer Warmumformtemperatur durchgeführt, wobei die Warmumformtemperatur eine Temperatur oberhalb der Mindestrekristallisationstemperatur des Metallrohrelements, vorzugsweise gleich oder größer als die Austenitstarttemperatur des Metallrohrelements ist. Insbesondere ist die Warmumformtemperatur kleiner als die Martensitstarttemperatur des Metallrohrelements und kleiner als die Schmelztemperatur der Vormaterialzusammensetzung.

Unter Warmumformen im Rahmen der vorliegenden Erfindung wird verstanden, wenn das Stahlrohr oberhalb der Rekristallisationstemperatur umgeformt wird. Insbesondere rekristallisiert der Werkstoff, wie beispielsweise Stahl während oder unmittelbar nach der Warmumformung, wodurch der Werkstoff seine ursprünglichen Eigenschaften wieder zurück erhält. Beispielsweise wird bei der Warmumformung von einer umformungssimultanen Rekristallisation des Werkstoffgefüges gesprochen. Beispiele für ein Warmumformen sind Warmwickeln, Warmbiegen und Kombinationen hiervon.

In einer vorteilhaften Ausführungsform der Erfindung wird das Erwärmen in Schritt i. und/oder das Wiedererwärmen in Schritt iii. wenigstens des vollständig oder in Teilbereichen befüllten Metallrohrelements mit einer Heizgeschwindigkeit von mindestens 2 K/s, vorzugsweise von größer als 20 K/s, besonders bevorzugt von größer als 50 K/s, ganz besonders bevorzugt von größer als 200 K/s durchgeführt.

In einer bevorzugten Ausführungsform der Erfindung wird beim Aufschäumen der Vormaterialzusammensetzung in Schritt i. eine Dichte des in dem mindestens einen Metallrohrelement ausgeschäumten Metallschaums von kleiner als 1 g/cm³, vorzugsweise von kleiner als 0,6 g/cm³, besonders bevorzugt in einem Bereich von 0,1 bis 0,5 g/cm³ eingestellt.

### Kurze Beschreibung der Zeichnungen

Die erfindungsgemäße Rohrfeder wird anhand der Zeichnungen erläutert.
- Fig. 1: zeigt schematisch unterschiedlich umgeformte Rohrfedern gemäß dem Stand der Technik,
- Fig. 2: zeigt schematisch eine Schrägansicht eines Metallrohrelements einer Rohrfeder gemäß dem Stand der Technik,
- Fig. 3: zeigt schematisch einen Querschnitt eines ausgeschäumten Metallrohrelements einer Rohrfeder gemäß Ausführungsformen der Erfindung.

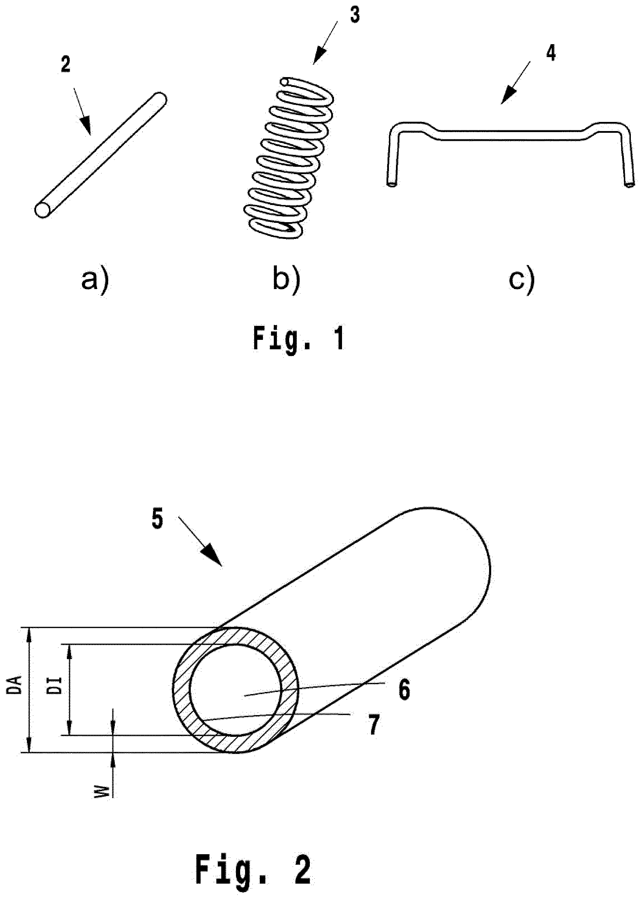

In der Fig. 1 sind mit den Bezeichnungen a) bis c) unterschiedlich umgeformte Rohrfedern 1 nach dem Stand der Technik dargestellt. Unter a) ist eine Drehstabfeder 2 dargestellt. Die Bezeichnung b) stellt eine Schraubenfeder und c) einen Stabilisator 4 dar.

In der Fig. 2 ist eine Schrägansicht eines Metallrohrelements 5 der Rohrfeder 1 nach dem Stand der Technik dargestellt. Das Metallrohrelement 5 weist einen Rohrinnenquerschnitt 6 mit einem Rohrinnendurchmesser DI, einem Rohraußendurchmesser DA, eine Rohrinnenwandung 7 und einer Rohrwanddicke W auf. Der Rohrinnenquerschnitt 6 ist nicht ausgeschäumt.

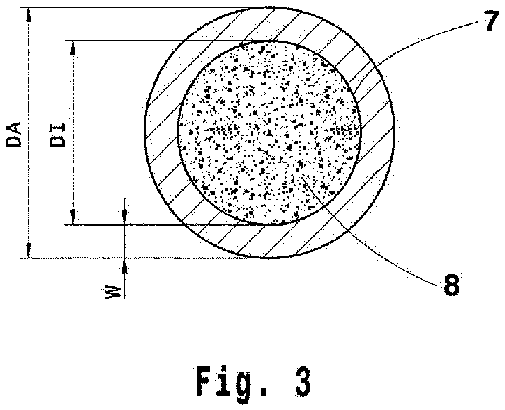

In der Fig. 3 ist schematisch ein Querschnitt des ausgeschäumten Metallrohrelements 5 einer Rohrfeder 1 gemäß einer Ausführungsform der Erfindung dargestellt. Innerhalb des Rohrinnenquerschnitt 6 ist wenigstens in einem Teilbereich mindestens der Metallschaum 8 angeordnet. Das erfindungsgemäße Metallrohrelement 5 weist den Rohrinnenquerschnitt 6 mit dem Rohrinnendurchmesser DI, dem Rohraußendurchmesser DA, die Rohrinnenwandung 7und die Rohrwanddicke W auf. Der Metallschaum 8 ist als eine variable Porenstruktur dargestellt.

### Gewerbliche Anwendbarkeit

Rohrfedern, insbesondere als Schraubenfeder, Drehstabfeder und/oder Stabilisator der vorbeschriebenen Art werden in der Produktion von Kraftfahrzeugen, insbesondere von Fahrwerken der Kraftfahrzeuge eingesetzt.

### Bezugszeichenliste

- 1 =: Rohrfeder
- 2 =: Drehstabfeder
- 3 =: Schraubenfeder
- 4 =: Stabilisator
- 5 =: Metallrohrelement
- 6 =: Rohrinnenquerschnitt
- 7 =: Rohrinnenwandung
- 8 =: Metallschaum

- DA =: Rohraußendurchmesser des Metallrohrelements
- DI =: Rohrinnendurchmesser des Metallrohrelements
- W =: Rohrwanddicke

## Patentansprüche

1. Rohrfeder (1), insbesondere als Schraubenfeder (3), Drehstabfeder (2) und/oder Stabilisator (4) für Kraftfahrzeuge, umfassend mindestens ein Metallrohrelement (5) mit einem Rohrinnenquerschnitt (6), einem Rohrinnendurchmesser (DI., einem Rohraußendurchmesser (DA), einer Rohrinnenwandung (7) und einer Rohrwanddicke (W),
**dadurch gekennzeichnet, dass**
in dem Rohrinnenquerschnitt (6) des mindestens einen Metallrohrelements (5) der Rohrfeder (1) wenigstens in einem Teilbereich mindestens ein Metallschaum (8) angeordnet ist und das mindestens ein Metallrohrelement (5) ein wenigstens teilweise martensitisches Gefüge aufweist.

2. Rohrfeder (1) nach Anspruch 1, **dadurch gekennzeichnet, dass** der in dem Rohrinnenquerschnitt (6) des mindestens einen Metallrohrelements (5) der Rohrfeder (1) wenigstens in einem Teilbereich mindestens eine angeordnete Metallschaum (8) wenigstens teilweise stoffschlüssig mit der Rohrinnenwandung (7) des mindestens einen Metallrohrelements (5) verbunden ist.

3. Rohrfeder (1) nach Anspruch 1 oder 2, **dadurch gekennzeichnet, dass** der Rohraußendurchmesser (DA) bezogen auf die Rohrwanddicke (W) des mindestens einen Metallrohrelements (5) ein Verhältnis von größer als 8, vorzugsweise von größer als 12, besonders bevorzugt von größer als 20, ganz besonders bevorzugt von größer als 30 aufweist.

4. Rohrfeder (1) nach einem der Ansprüche 1 bis 3, **dadurch gekennzeichnet, dass** der in dem Rohrinnenquerschnitt (6) des mindestens einen Metallrohrelements (5) mindestens eine angeordnete Metallschaum (8) eine Dichte von kleiner als 1 g/cm³, vorzugsweise von kleiner als 0,6 g/cm³, besonders bevorzugt in einem Bereich von 0,1 bis 0,5 g/cm³ aufweist.

5. Rohrfeder (1) nach einem der Ansprüche 1 bis 4, **dadurch gekennzeichnet, dass** das mindestens eine Metallrohrelement (5) wenigstens teilweise umgeformt ist zu einer nicht vollständig geradlinig ausgebildeten Rohrfeder (1).

6. Verfahren zum Herstellen einer wenigstens in einem Teilbereich ausgeschäumten Rohrfeder (1), insbesondere als Schraubenfeder (3), Drehstabfeder (2) und/oder Stabilisator (4) für Kraftfahrzeuge, umfassend die Schritte:
a) Bereitstellen wenigstens einer Vormaterialzusammensetzung, umfassend mindestens eine Metallkomponente mit einer Schmelztemperatur und eine Treibmittelkomponente;
b) Bereitstellen einer Rohrfeder (1) umfassend mindestens ein Metallrohrelement (5) mit einem Rohrinnenquerschnitt (6), einem Rohrinnendurchmesser (DI., einem Rohraußendurchmesser (DA), einer Rohrinnenwandung (7) und einer Rohrwanddicke (W);
c) Einbringen der in Schritt a) bereitgestellten mindestens einen Vormaterialzusammensetzung in das mindestens eine Metallrohrelement (5) der in Schritt b) bereitgestellten Rohrfeder (1), wobei das mindestens eine Metallrohrelement (5) vollständig oder in Teilbereichen befüllt wird;
d) Vergüten wenigstens des in Schritt c) vollständig oder in Teilbereichen befüllten mindestens einen Metallrohrelements (5), umfassend
i. Erwärmen des in Schritt c) vollständig oder in Teilbereichen befüllten mindestens einen Metallrohrelements (5) wenigstens auf eine Härtungstemperatur, wobei die Härtungstemperatur eine Temperatur oberhalb der Mindestrekristallisationstemperatur des Metallrohrelements (5), vorzugsweise gleich oder größer als die Austenitstarttemperatur des Metallrohrelements (5) ist und wobei die Härtungstemperatur gleich oder größer als die Schmelztemperatur der in Schritt c) eingebrachten mindestens einen Vormaterialzusammensetzung ist, wobei die Vormaterialzusammensetzung aufschäumt unter Herstellen eines wenigstens in einem Teilbereich ausgeschäumten mindestens einen Metallrohrelements (5);
ii. Abschrecken des in Schritt i. wenigstens auf die Härtungstemperatur erwärmten vollständig oder in Teilbereichen befüllten mindestens einen Metallrohrelements (5) auf eine erste Abkühltemperatur, wobei die erste Abkühltemperatur eine Temperatur unterhalb der Mindestrekristallisationstemperatur des Metallrohrelements (5) ist und sich in dem vollständig oder in Teilbereichen befüllten mindestens einen Metallrohrelement (5) ein wenigstens teilweise martensitisches Gefüge einstellt;
iii. Wiedererwärmen des in Schritt ii. abgeschreckten vollständig oder in Teilbereichen befüllten mindestens einen Metallrohrelements (5) auf eine erste Anlasstemperatur, welche kleiner ist als die Austenitstarttemperatur;
iv. Abkühlen des in Schritt iii. wiedererwärmten vollständig oder in Teilbereichen befüllten mindestens einen Metallrohrelements (5) auf eine zweite Abkühltemperatur, wobei die zweite Abkühltemperatur wenigstens kleiner ist als die erste Anlasstemperatur,
**dadurch gekennzeichnet, dass**
wenigstens in Teilbereichen zwischen der Rohrinnenwandung (7) des wenigstens in einem Teilbereich ausgeschäumten mindestens einen Metallrohrelements (5) und dem Metallschaum (8) des wenigstens in einem Teilbereich ausgeschäumten mindestens einen Metallrohrelements (5) eine wenigstens teilweise stoffschlüssige Verbindung ausgebildet wird.

7. Verfahren zum Herstellen einer wenigstens in einem Teilbereich ausgeschäumten Rohrfeder (1) nach Anspruch 6, **dadurch gekennzeichnet, dass** das in Schritt b) bereitgestellte mindestens eine Metallrohrelement (5) wenigstens teilweise ein ferritisch-perlitisches Gefüge aufweist.

8. Verfahren zum Herstellen einer wenigstens in einem Teilbereich ausgeschäumten Rohrfeder (1) nach einem der Ansprüche 6 bis 7, **dadurch gekennzeichnet, dass** in einem weiteren Schritt e) ein Umformen des in Schritt b) bereitgestellten mindestens einen Metallrohrelements (5) und/oder des in Schritt d) vergüteten wenigstens in einem Teilbereich ausgeschäumten mindestens einen Metallrohrelements (5) zu einer nicht vollständig geradlinig ausgebildeten wenigstens in einem Teilbereich ausgeschäumten Rohrfeder (1) durchgeführt wird.

9. Verfahren zum Herstellen einer wenigstens in einem Teilbereich ausgeschäumten Rohrfeder (1) nach einem der Ansprüche 6 bis 8, **dadurch gekennzeichnet, dass** das Umformen in Schritt e) ein Kaltumformen ist und als ein Schritt in der Reihenfolge nach dem Vergüten in Schritt d) bei einer Kaltumformtemperatur durchgeführt wird, wobei die Kaltumformtemperatur eine Temperatur unterhalb der Mindestrekristallisationstemperatur des Metallrohrelements (5), vorzugsweise kleiner als die Austenitstarttemperatur des Metallrohrelements (5) ist.

10. Verfahren zum Herstellen einer wenigstens in einem Teilbereich ausgeschäumten Rohrfeder (1) nach einem der Ansprüche 6 bis 9, **dadurch gekennzeichnet, dass** das Umformen in Schritt e) ein Warmumformen ist und als ein Schritt in der Reihenfolge vor dem Vergüten in Schritt d) bei einer Warmumformtemperatur durchgeführt wird, wobei die Warmumformtemperatur eine Temperatur oberhalb der Mindestrekristallisationstemperatur des Metallrohrelements (5), vorzugsweise gleich oder größer als die Austenitstarttemperatur des Metallrohrelements (5) ist.

11. Verfahren zum Herstellen einer wenigstens in einem Teilbereich ausgeschäumten Rohrfeder (1) nach einem der Ansprüche 6 bis 10, **dadurch gekennzeichnet, dass** beim Aufschäumen der Vormaterialzusammensetzung in Schritt i. eine Dichte des in dem mindestens einen Metallrohrelement (5) ausgeschäumten Metallschaums (8) von kleiner als 1 g/cm³, vorzugsweise von kleiner als 0,6 g/cm³, besonders bevorzugt in einem Bereich von 0,1 bis 0,5 g/cm³ eingestellt wird.

12. Verwendung einer wenigstens in einem Teilbereich ausgeschäumten Rohrfeder (1) nach einem der Ansprüche 1 bis 5 für Fahrwerke von Fahrzeugen, insbesondere Kraftfahrzeugen.

## Claims

1. Tubular spring (1), in particular as a coil spring (3), torsion-rod spring (2), and/or stabilizer (4) for motor vehicles, comprising at least one metal tube element (5) having a tube internal cross section (6), a tube internal diameter (DI), a tube external diameter (DA), a tube internal wall (7), and a tube wall thickness (W),
**characterized in that**
at least one metal foam (8) is disposed in the tube internal cross section (6) of the at least one metal tube element (5) of the tubular spring (1) in at least one part-region, and the at least one metal tube element (5) has an at least partially martensitic structure.

2. Tubular spring (1) according to Claim 1, **characterized in that** the at least one metal foam (8) that is disposed in the tube internal cross section (6) of the at least one metal tube element (5) of the tubular spring (1) in at least one part-region is connected in an at least partially materially integral manner to the tube internal wall (7) of the at least one metal tube element (5) .

3. Tubular spring (1) according to Claim 1 or 2, **characterized in that** the tube external diameter (DA) in relation to the tube wall thickness (W) of the at least one metal tube element (5) has a ratio of more than 8, preferably of more than 12, particularly preferably of more than 20, most particularly preferably of more than 30.

4. Tubular spring (1) according to one of Claims 1 to 3, **characterized in that** the at least one metal foam (8) that is disposed in the tube internal cross section (6) of the at least one metal tube element (5) has a density of less than 1 g/cm³, preferably of less than 0.6 g/cm³, particularly preferably in a range from 0.1 to 0.5 g/cm³.

5. Tubular spring (1) according to one of Claims 1 to 4, **characterized in that** the at least one metal tube element (5) is at least partially formed so as to be a tubular spring (1) that is configured so as not to be fully rectilinear.

6. Method for producing a tubular spring (1) that is foamed in at least one part-region, in particular as a coil spring (3), torsion-rod spring (2), and/or stabilizer (4) for motor vehicles, said method comprising the following steps:
a) providing at least one preliminary material composition comprising at least one metal component having a melting temperature, and an expanding agent component;
b) providing a tubular spring (1) comprising at least one metal tube element (5) having a tube internal cross section (6), a tube internal diameter (DI), a tube external diameter (DA), a tube internal wall (7), and a tube wall thickness (W);
c) inserting the at least one preliminary material composition as provided in step a) into the at least one metal tube element (5) of the tubular spring (1) as provided in step b), wherein the at least one metal tube element (5) is filled completely or in part-regions;
d) tempering at least the at least one metal tube element (5) as filled completely or in part-regions in step c), said tempering comprising
i. heating the at least one metal tube element (5) as filled completely or in part-regions in step c) at least to a hardening temperature, wherein the hardening temperature is a temperature above the minimum re-crystallization temperature of the metal tube element (5), preferably equal to or higher than the austenite start temperature of the metal tube element (5), and wherein the hardening temperature is equal to or higher than the melting temperature of the at least one preliminary material composition as inserted in step c), wherein the preliminary material composition foams while producing an at least one metal tube element (5) that is foamed in at least one part-region;
ii. quenching the at least one metal tube element (5) that is filled completely or in part-regions and is in step i. heated at least to the hardening temperature to a first cooling temperature, wherein the first cooling temperature is a temperature below the minimum re-crystallization temperature of the metal tube element (5) and an at least partially martensitic structure is set in the at least one metal tube element (5) that is filled completely or in part-regions;
iii. re-heating the at least one metal tube element (5) that is filled completely or in part-regions as quenched in step ii. to a first tempering temperature which is lower than the austenite start temperature;
iv. cooling the at least one metal tube element (5) that is filled completely or in part-regions as re-heated in step iii. to a second cooling temperature, wherein the second cooling temperature is at least lower than the first tempering temperature,
**characterized in that**
an at least partially materially integral connection is configured at least in part-regions between the tube internal wall (7) of the at least one metal tube element (5) that is foamed in at least one part-region and the metal foam (8) of the at least one metal tube element (5) that is foamed in at least one part-region.

7. Method for producing a tubular spring (1) that is foamed in at least one part-region, according to Claim 6, **characterized in that** the at least one metal tube element (5) as provided in step b) has at least in part a ferritic pearlitic structure.

8. Method for producing a tubular spring (1) that is foamed in at least one part-region, according to one of Claims 6 to 7, **characterized in that** forming of the at least one metal tube element (5) as provided in step b), and/or the at least one metal tube element (5) that is foamed in at least one part-region and tempered as in step d), so as to be a tubular spring (1) that is configured so as not to be fully rectilinear and is foamed in at least one part-region, is carried out in a further step e).

9. Method for producing a tubular spring (1) that is foamed in at least one part-region, according to one of Claims 6 to 8, **characterized in that** forming in step e) is cold-forming and as a step is carried out at a cold-forming temperature in the sequence following the tempering in step d), wherein the cold-forming temperature is a temperature below the minimum re-crystallization temperature of the metal tube element (5), preferably lower than the austenite start temperature of the metal tube element (5).

10. Method for producing a tubular spring (1) that is foamed in at least one part-region, according to one of Claims 6 to 9, **characterized in that** forming in step e) is hot-forming and as a step is carried out at a hot-forming temperature in the sequence prior to the tempering in step d), wherein the hot-forming temperature is a temperature above the minimum re-crystallization temperature of the metal tube element (5), preferably equal to or higher than the austenite start temperature of the metal tube element (5).

11. Method for producing a tubular spring (1) that is foamed in at least one part-region, according to one of Claims 6 to 10, **characterized in that** in the foaming of the preliminary material composition in step i. a density of the metal foam (8) that is foamed in the at least one metal tube element (5) of less than 1 g/cm³, preferably of less than 0.6 g/cm³, particularly preferably in a range from 0.1 to 0.5 g/cm³ is set.

12. Use of a tubular spring (1) that is foamed in at least one part-region, according to one of Claims 1 to 5, for suspension systems of vehicles, in particular motor vehicles.

## Revendications

1. Ressort tubulaire (1), notamment sous la forme d'un ressort hélicoïdal (3), d'un ressort à barre de torsion (2) et/ou d'un stabilisateur (4) pour véhicules automobiles, comprenant au moins un élément tubulaire métallique (5) ayant une section transversale intérieure de tube (6), un diamètre intérieur de tube (DI), un diamètre extérieur de tube (DA), une paroi interne de tube (7) et une épaisseur de paroi de tube (W), **caractérisé en ce qu'**au moins une mousse métallique (8) est disposée au moins dans une zone partielle dans la section transversale intérieure de tube (6) de l'au moins un élément tubulaire métallique (5) du ressort tubulaire (1) et l'au moins un élément tubulaire métallique (5) présente une structure au moins partiellement martensitique.

2. Ressort tubulaire (1) selon la revendication 1, **caractérisé en ce que** l'au moins une mousse métallique (8) disposée au moins dans une zone partielle dans la section transversale intérieure de tube (6) de l'au moins un élément tubulaire métallique (5) du ressort tubulaire (1) est reliée au moins partiellement par fusion de matières avec la paroi interne de tube (7) de l'au moins un élément tubulaire métallique (5).

3. Ressort tubulaire (1) selon la revendication 1 ou 2, **caractérisé en ce que** le diamètre extérieur de tube (DA), en référence à l'épaisseur de paroi de tube (W) de l'au moins un élément tubulaire métallique (5), présente un rapport supérieur à 8, de préférence supérieur à 12, notamment de préférence supérieur à 20, tout particulièrement de préférence supérieur à 30.

4. Ressort tubulaire (1) selon l'une des revendications 1 à 3, **caractérisé en ce que** l'au moins une mousse métallique (8) disposée dans la section transversale intérieure de tube (6) de l'au moins un élément tubulaire métallique (5) présente une densité inférieure à 1 g/cm³, de préférence inférieure à 0,6 g/cm³, notamment de préférence comprise dans une plage de 0,1 à 0,5 g/cm³.

5. Ressort tubulaire (1) selon l'une des revendications 1 à 4, **caractérisé en ce que** l'au moins un élément tubulaire métallique (5) est au moins partiellement façonné en un ressort tubulaire (1) de configuration non entièrement rectiligne.

6. Procédé de fabrication d'un ressort tubulaire (1) rempli de mousse au moins dans une zone partielle, notamment sous la forme d'un ressort hélicoïdal (3), d'un ressort à barre de torsion (2) et/ou d'un stabilisateur (4) pour véhicules automobiles, comprenant les étapes suivantes :
a) fourniture d'au moins une composition de matière brute, comprenant au moins une composante métallique ayant une température de fusion et une composante agent moussant ;
b) fourniture d'un ressort tubulaire (1) comprenant au moins un élément tubulaire métallique (5) ayant une section transversale intérieure de tube (6), un diamètre intérieur de tube (DI), un diamètre extérieur de tube (DA), une paroi interne de tube (7) et une épaisseur de paroi de tube (W) ;
c) introduction de l'au moins une composition de matière brute fournie à l'étape a) dans l'au moins un élément tubulaire métallique (5) du ressort tubulaire (1) fourni à l'étape b), l'au moins un élément tubulaire métallique (5) étant rempli entièrement ou dans des zones partielles ;
d) trempe et revenu d'au moins l'au moins un élément tubulaire métallique (5) rempli entièrement ou dans des zones partielles à l'étape c), comprenant
i. échauffement de l'au moins un élément tubulaire métallique (5) rempli entièrement ou dans des zones partielles à l'étape c) au moins à une température de durcissement, la température de durcissement étant une température supérieure à la température de recristallisation minimale de l'élément tubulaire métallique (5), de préférence égale ou supérieure à la température de début d'austénitisation de l'élément tubulaire métallique (5) et la température de durcissement étant égale ou supérieure à la température de fusion de l'au moins une composition de matière brute introduite à l'étape c), la composition de matière brute s'expansant en créant au moins un élément tubulaire métallique (5) rempli de mousse au moins dans une zone partielle ;
ii. refroidissement brusque de l'au moins un élément tubulaire métallique (5) rempli entièrement ou dans des zones partielles échauffé au moins à la température de durcissement à l'étape i. à une première température de refroidissement, la première température de refroidissement étant une température inférieure à la température de recristallisation minimale de l'élément tubulaire métallique (5) et une structure au moins partiellement martensitique s'établissant dans l'au moins un élément tubulaire métallique (5) rempli entièrement ou dans des zones partielles ;
iii. réchauffement de l'au moins un élément tubulaire métallique (5) rempli entièrement ou dans des zones partielles refroidi brusquement à l'étape ii. à une première température de revenu qui est inférieure à la température de début d'austénitisation ;
iv. refroidissement de l'au moins un élément tubulaire métallique (5) rempli entièrement ou dans des zones partielles réchauffé à l'étape iii. à une deuxième température de refroidissement, la deuxième température de refroidissement étant au moins inférieure à la première température de revenu,
**caractérisé en ce que**
une liaison au moins partiellement par fusion de matières est formée au moins dans des zones partielles entre la paroi interne de tube (7) de l'au moins un élément tubulaire métallique (5) rempli de mousse au moins dans une zone partielle et la mousse métallique (8) de l'au moins un élément tubulaire métallique (5) rempli de mousse au moins dans une zone partielle.

7. Procédé de fabrication d'un ressort tubulaire (1) rempli de mousse au moins dans une zone partielle selon la revendication 6, **caractérisé en ce que** l'au moins un élément tubulaire métallique (5) fourni à l'étape b) possède au moins partiellement une structure ferritique-perlitique.

8. Procédé de fabrication d'un ressort tubulaire (1) rempli de mousse au moins dans une zone partielle selon l'une des revendications 6 et 7, **caractérisé en ce qu'**un façonnage de l'au moins un élément tubulaire métallique (5) fourni à l'étape b) et/ou de l'au moins un élément tubulaire métallique (5) rempli de mousse au moins dans une zone partielle trempé et revenu à l'étape d) en un ressort tubulaire (1) de configuration non entièrement rectiligne et rempli de mousse au moins dans une zone partielle est effectué dans une étape supplémentaire e).

9. Procédé de fabrication d'un ressort tubulaire (1) rempli de mousse au moins dans une zone partielle selon l'une des revendications 6 à 8, **caractérisé en ce que** le façonnage à l'étape e) est un façonnage à froid et il est réalisé comme une étape dans la séquence après la trempe et le revenu à l'étape d) à une température de façonnage à froid, la température de façonnage à froid étant une température au-dessous de la température de recristallisation minimale de l'élément tubulaire métallique (5), de préférence inférieure à la température de début d'austénitisation de l'élément tubulaire métallique (5).

10. Procédé de fabrication d'un ressort tubulaire (1) rempli de mousse au moins dans une zone partielle selon l'une des revendications 6 à 9, **caractérisé en ce que** le façonnage à l'étape e) est un façonnage à chaud et il est réalisé comme une étape dans la séquence avant la trempe et le revenu à l'étape d) à une température de façonnage à chaud, la température de façonnage à chaud étant une température au-dessus de la température de recristallisation minimale de l'élément tubulaire métallique (5), de préférence égale ou supérieure à la température de début d'austénitisation de l'élément tubulaire métallique (5).

11. Procédé de fabrication d'un ressort tubulaire (1) rempli de mousse au moins dans une zone partielle selon l'une des revendications 6 à 10, **caractérisé en ce que** lors de l'expansion de la composition de matière brute à l'étape i., une densité de la mousse métallique (8) expansée dans l'au moins un élément tubulaire métallique (5) est réglée à une valeur inférieure à 1 g/cm³, de préférence inférieure à 0,6 g/cm³, notamment de préférence comprise dans une plage de 0,1 à 0,5 g/cm³.

12. Utilisation d'un ressort tubulaire (1) rempli de mousse au moins dans une zone partielle selon l'une des revendications 1 à 5 pour des mécanismes de roulement de véhicules, notamment de véhicules automobiles.
